# EUROPÄISCHE PATENTANMELDUNG

(11) **EP 1 162 093 A2**
(43) Veröffentlichungstag der Anmeldung: **12.12.2001**
(21) Anmeldenummer: 01113241.2
(22) Anmeldetag: 31.05.2001
(51) Int. Cl.: B60H 1/00, B62D 33/00

(54) **Führerhaus mit Klimaanlage eines geländegängigen Arbeitsfahrzeuges**

(30) Priorität: 06.06.2000 US 587925
(71) Anmelder: DEERE & COMPANY, Moline, Illinois 61265-8098 (US)
(72) Erfinder: Bollweg, Nicholas Edward, Galena, IL 61036 (US); Klas, David Joseph, Dyersville, IA 52040 (US); Stender, Mark Wayne, Dubuque, IA 52002 (US); Ruhter, Martin Lavern, Dubuque, IA 52002 (US)
(74) Vertreter: Lau-Loskill, Philipp, Dipl.-Phys.

(57) **Zusammenfassung**

Um bei einem Führerhaus für ein geländegängiges Arbeitsfahrzeug, mit einem einen Innenraum aufweisenden Bedienplatz (28), von dem aus ein Bediener das geländegängige Arbeitsfahrzeug steuert, weiterhin einem Frontfenster (32), einem Heckfenster (36), einem Dach (38) sowie einem Fußboden (40), und einem innerhalb des Bedienplatzes (28) untergebrachten und in pneumatischer Verbindung mit dem Bedienplatz (28) stehenden HVAC-Modul (44), einfache und leicht zugängliche Reparatur- und Montagebedingungen zu schaffen, wird vorgeschlagen, dass unterhalb des Heckfensters (36) eine Zugangsöffnung (80) vorgesehen ist, worüber die Hauptkomponenten des HVAC-Moduls (44) reparierbar und montierbar/demontierbar sind.

## Beschreibung

Die vorliegende Erfindung betrifft ein Führerhaus mit Klimaanlage (HVAC-Modul) eines geländegängigen Arbeitsfahrzeuges sowie das geländegängige Arbeitsfahrzeug selbst.

Die meisten geländegängigen Arbeitsfahrzeuge sind mit einem Heizungs-, Ventilations- und Klimasystem (HVAC), nachfolgend Klimaanlage bzw. HVAC genannt, ausgestattet, um für den Bediener einen Komfort bei unterschiedlichen klimatischen Bedingungen zu gewährleisten. Diese Klimaanlagen (HVAC) können Reihennacherwärmungssysteme sein. Dementsprechend passiert der gesamte Luftstrom ständig sowohl einen Kühlungs-Wärmetauscher (Verdampfer) als auch einen Heizungs-Wärmetauscher (Heizung). Die Temperatursteuerung erfolgt durch wiederholte Betätigung der Kompressorkupplung und/oder durch Öffnung des Motorkühlmittelkontrollventils. Es wurden auch Teil-Nacherwärmungs-Mischsysteme verwendet, wo Luftmischklappen eingesetzt werden, um den Strom der zu konditionierenden Luft durch die der Wärmeaustauscher zu steuern.

Bei einigen Einrichtungen wurden die Klimakomponenten des HVAC-Systems im Bereich des Dachaufbaus des Arbeitsfahrzeuges und die Heizungskomponente des HVAC-Systems im Fußboden des Führerhauses angeordnet. Dies kann jedoch zu einer Verdopplung von Komponenten führen. Außerdem werden modular aufgebaute HVAC Systeme vorgeschlagen, die auf dem Boden des Arbeitsfahrzeuges angeordnet sind, mit Lüftungskanälen die die konditionierte Luft in Richtung Dachaufbau und zu Bodenlüftungen leitet. Der Dachaufbau ist außerdem mit Lüftungen ausgestattet, die die konditionierte Luft abwärts entlang den Seiten des Fahrzeuges und in Richtung des Bedieners leitet.

Außen an Arbeitsfahrzeugen sind Zugangsklappen vorgesehen, um einen Zugang zu Luftfiltern zu schaffen, durch welche Umgebungsluft angesaugt wird. Dies erlaubt dem Bediener den Filter von der Außenseite des Bedienplatzes her zu säubern und zu ersetzen. Durch die Anordnung des schmutzigen Filters außerhalb des Bedienplatzes kann die Schmutzquelle von dort ferngehalten werden. Solche Filter können am Batteriefach eines forstwirtschaftlichen Rücketraktors befestigt sein. Das Batteriefach weist eine Zugangsöffnungsklappe für die Batterien und den Filter auf, welcher unterhalb des Heckfensters des Schlepper platziert ist. Diese Zugangsklappe ist schwenkbar entlang einer Querachse am Fahrzeug gelagert.

Aus der US 4,088,364 geht ein gattungsgemäß ausgebildetes Führerhaus hervor. Das Führerhaus weist einen Innenraum mit Bedienplatz auf, von dem aus ein Bediener das zugeordnete Fahrzeug steuert. Das Führerhaus besitzt weiterhin seitliche Fenster sowie ein Dach, das von seitlichen Pfosten getragen wird. Innerhalb des Innenraums ist ein HVAC-Modul untergebracht, das mit diversen Luftöffnungen im Dachbereich sowie im Fußbodenbereich zum Klimatisieren korrespondiert. Zu diesem Zwecke bilden die Pfosten funktionsintegrierte Luftkanäle zwischen dem Dachbereich und dem HVAC-Modul.

Aufgabe der vorliegenden Erfindung ist es ein HVAC-Modul zur Verfügung zu stellen, welches in einfacher Weise von außerhalb des Führerhauses her gewartet werden kann, welchem es zugeordnet ist. Eine weitere Aufgabe der vorliegenden Erfindung ist es, ein HVAC-Modul in kompakter Bauweise zur Verfügung zu stellen, das in einer äußeren Konsolenwand bzw. Pultwand, die in dem Bedienerführerhaus angeordnet ist, integriert ist.

Die Aufgabe wird ausgehend von einer Einrichtung gemäß dem Oberbegriff des Anspruchs 1 in Verbindung mit des kennzeichnenden Merkmalen gelöst.

Die erfindungsgemäße Aufgabe wird insbesondere ausgehend von einem Führerhaus für ein geländegängiges Arbeitsfahrzeug, mit einem einen Innenraum aufweisenden Bedienplatz, von dem aus ein Bediener das geländegängige Arbeitsfahrzeug steuert, weiterhin einem Frontfenster, einem Heckfenster, einem Dach sowie einem Fußboden, und einem innerhalb des Bedienplatzes untergebrachten und in pneumatischer Verbindung mit dem Bedienplatz stehenden HVAC-Modul, gelöst, in dem unterhalb des Heckfensters eine Zugangsöffnung vorgesehen ist, worüber das HVAC-Modul reparierbar, montierbar und/oder demontierbar ist.

Arbeitsfahrzeuge im Sinne dieser Erfindung umfassen beispielsweise Rad- und/oder Kettenfahrzeuge.

Der Begriff Führerhaus im Sinne dieser Erfindung umfasst den Bereich in dem sich ein Bediener zur Steuerung des Fahrzeuges aufhalten kann. Führerhaus im Sinne dieser Erfindung ist beispielsweise auch ein Bedienungsstand.

Weitere vorteilhafte erfindungsgemäße Ausführungsformen sind in den abhängigen Ansprüchen angegeben.

Vorzugsweise sind mittels der Zugangsöffnung die Hauptkomponenten des HVAC-Moduls reparierbar, montierbar und/oder demontierbar.

In einer erfindungsgemäßen Ausführungsform steht eine erste Klima-Luftleitung mit dem HVAC-Modul in pneumatischer Verbindung, um klimatisierte Luft in den Innenraum des Bedienplatzes zu leiten.

Vorzugsweise leitet die erste Klima-Luftleitung klimatisierte Luft vertikal zum Dach, wobei von dort aus eine Verteilung der klimatisierten Luft in den Innenraum des Bedienplatzes durch im Dach montierte Luftöffnungen erfolgt.

Der Bereich des Daches kann mit einem Luftverteiler ausgestattet sein, der klimatisierte Luft von der ersten Klima-Luftleitung erhält und diese zwischen einem ersten Strömungskanal im Dach und einem zweiten Strömungskanal im Dach verteilt.

Vorteilhaft ist, wenn der erste Strömungskanal mit weniger Luftöffnungen als der zweite Strömungskanal ausgestattet ist, so dass der Luftverteiler die klimatisierte Luft ungleich zwischen dem ersten Strömungskanal und dem zweiten Strömungskanal verteilt, um den Hauptanteil der klimatisierten Luft durch den zweiten Strömungskanal zu leiten.

Es kann auch eine zweite Klima-Luftleitung zur Leitung klimatisierter Luft in den Innenraum des Bedienplatzes vorgesehen sein, wobei die klimatisierte Luft durch die zweite Klima-Luftleitung zum Fußboden geleitet wird.

Ferner kann ein Steuerpult vorgesehen sein, auf dem Bedienelemente angeordnet sind, wobei das Steuerpult eine Pultwand aufweist, dessen als Verkleidungsfläche dienende Außenfläche dem Innenraum zugewandt ist, wobei das Steuerpult weiterhin diverse Öffnungen aufweist, durch welche Luft zu dem HVAC-Modul rückführbar ist.

Der Bedienplatz verfügt vorzugsweise über eine äußeren Luftöffnung zur Frischluftzuführung zum HVAC-Modul.

Das erfindungsgemäße HVAC-Modul weist eine als Verkleidungsfläche dienende Außenwand auf, die dem Innenraum zugewandt ist, wobei die Außenfläche der Außenwand identisch mit der Außenfläche der Pultwand ist.

Vorteilhaft ist es, wenn der Bedienplatz mit einer Klappe zum Verschließen der Zugangsöffnung ausgestattet ist, die klappbar und/oder drehbar am Bedienplatz angebracht ist.

In einer bevorzugten Ausführungsform umfasst das Führerhaus eines geländegängigen Arbeitsfahrzeuges ein Führerhaus mit einer Bedienungskonsole bzw. Bedienungspult, das eine Pultwand umfasst, deren Außenfläche dem Bediener zugewandt ist. Vorzugsweise kann ein HVAC-Modul mit einer Außenwand im Führerhaus derart angeordnet sein, dass die dem Bediener zugewandte äußere Oberfläche identisch mit der äußeren Oberfläche der Pultwand ist, was zu einer kompakten Bauweise führt. Das HVAC-Module erstreckt sich rückwärtig von der Außenwand des Pults zum hinteren Teil des Führerhauses entlang. Weiterhin kann sich das HVAC-Module rückwärtig unterhalb des Heckfensters des Führerhauses entlang erstrecken.

Die Hauptkomponenten der Klimaanlage bzw. HVAC-Moduls, d.h. Gebläse, Verdampfer und Heizung, können von außerhalb des Führerhauses durch eine erfindungsgemäße Zugangsöffnung in der Rückwand unterhalb des Heckfensters gewartet, instandgesetzt und ausgewechselt werden. Das HVAC-Modul erzeugt klimatisierte Luft für den Bedienplatz. Durch Plazierung der Zugangsöffnung unterhalb des Heckfensters kann das HVAC-Modul leichter gewartet werden.

Die Zugangsöffnung kann mit einer Klappe bzw. Tür versehen werden, welche klappbar und/oder drehbar am Führerhaus gelagert ist. Die Klappe ist vorzugsweise über entsprechende Scharniere, welche eine querverlaufende Schwenkachse definieren, montiert.

Die Erfindung ist des weiteren in einem geländegängigen Fahrzeug zu sehen, wie es im Anspruch 13 angegeben ist und das ein Führerhaus, wie vorstehend beschrieben, aufweist.

Weitere die Erfindung verbessernde Maßnahmen sind in den abhängigen Ansprüchen angegeben oder werden nachstehend gemeinsam mit der Beschreibung eines bevorzugten Ausführungsbeispiels der Erfindung anhand der Figuren näher dargestellt.

Es zeigt:
- Figur 1: eine perspektivische Hinteransicht eines forstwirtschaftlichen Rücketraktors als geländegängiges Arbeitsfahrzeug,
- Figur 2: eine perspektivische Frontansicht des Bedienplatzes gemäß der vorliegenden Erfindung,
- Figur 3: eine Hinteransicht von oben auf das Führerhaus, und
- Figur 4: eine teilweise Hinteransicht auf das Führerhaus von unten her.

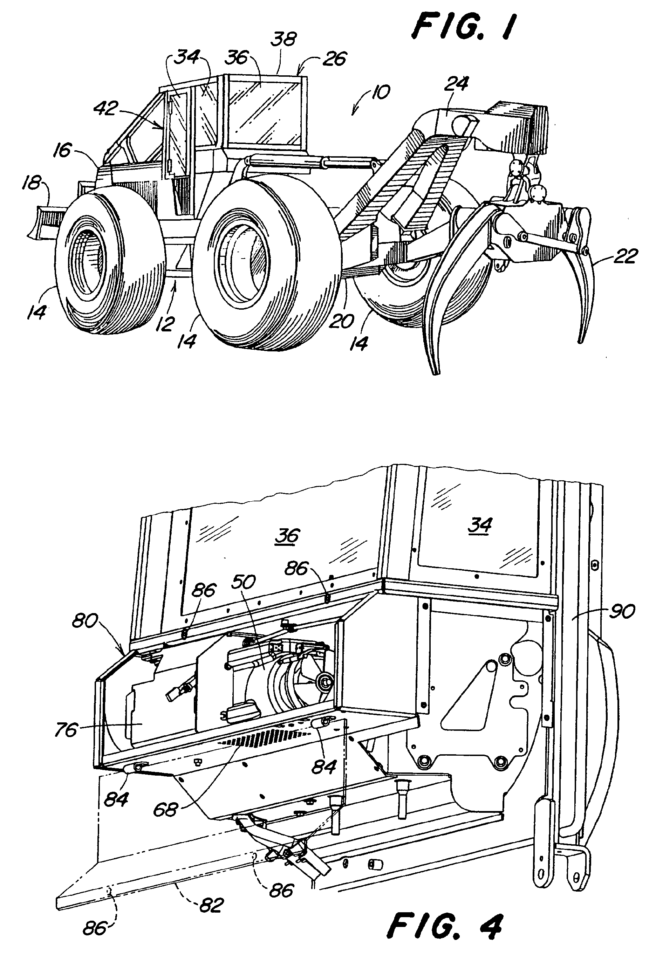

Die Figur 1 zeigt ein geländegängiges Arbeitsfahrzeug, welches im vorliegenden Beispiel als forstwirtschaftlicher Rücketraktor ausgebildet ist. Der Rücketraktor 10 weist einen Trägerrahmen 12 auf, an dem Bodenkontaktmittel 14 zum Stützen und Antreiben des Fahrzeuges angebracht sind. Obwohl das gezeigte Ausführungsbeispiel ein Fahrzeug zeigt, bei dem die Bodenkontaktmittel 14 als Reifen ausgebildet sind, kann der Gegenstand der vorliegenden Erfindung auch für Raupenfahrzeuge, beispielsweise mit einer auf Stahl oder einer auf Gummi basierenden Raupenlaufbahn, gleichermaßen verwendet werden.

Der Rahmen 12 weist einen Frontbereich 16 auf, der mit einem Frontschild 18 versehen ist; ein Heckbereich 20 besitzt dagegen eine Heckzange 22 und eine zugehörige Arbeitsausrüstung 24. Die Zange 22 und die zugeordnete Arbeitsausrüstung 24 bilden das Werkzeug zur Ausführung der Arbeitsoperationen, welche im vorliegenden Fall ein Greifen und Schleppen von Baumstämmen sind. Da der Rücketraktor 10 ein Gelenkfahrzeug darstellt, sind der Frontbereich 16 und der Heckbereich 20 über eine vertikal verlaufende Lagerachse drehbar aneinandergekoppelt. Der Betrieb des Fahrzeuges wird über ein Führerhaus 26 gesteuert. Das Führerhaus 26 ist im gezeigten Ausführungsbeispiel als geschlossene Kabine ausgebildet. Die vorliegende Erfindung ist ebenfalls anwendbar auf ein Führerhaus, welches im Baldachin-Stil mit einem Front- und einem Heckfenster und offenen Seiten ausgestaltet ist.

Das Führerhaus 26 ist mit einem Bedienplatz 28 versehen, welches ein Pult bzw. Steuerpult 30 besitzt. Das Steuerpult 30 ist mit Bedienelementen 46 ausgestattet, um die Zange 22 und die zugeordnete Arbeitsausrüstung 24 zu steuern. Das Steuerpult 30 besteht hier aus Kunststoff und ist mit einer Pultwand 31 versehen, deren als Verkleidungsfläche ausgebildete Außenfläche dem Bediener zugewandt ist. Der Bedienplatz 28 definiert einen Innenraum, von dem aus das Fahrzeug steuerbar ist. Der Bediener sitzt dabei in einem - hier nicht weiter dargestellten - Sitz, der im Innenraum plaziert ist. Der Bedienplatz 28 der gezeigten Ausführungsform weist ein Frontfenster 32, Seitenfenster 34 und ein Heckfenster 36, sowie ein Dach 38 und einen Fußboden 40 auf. Eine Tür 42 kann dabei einen Teil des Seitenfensterbereiches ausbilden.

Ein HVAC-Modul 44 in kompakter Bauweise ist ebenfalls am Bedienplatz 28 angeordnet und bildet dabei einen Teil des Steuerpults 30 aus. Die Außenwand 45 des HVAC-Moduls 44 weist eine Außenfläche auf, die identisch mit bzw. gleichzeitig auch die Außenfläche der Pultwand 31 des Steuerpults 30 ist. Auf diese Weise schafft die Außenwand 45 des HVAC-Moduls 44 eine Fläche, die den Innenraum des Bedienplatzes 28 begrenzt. Obwohl die Kanten des HVAC-Moduls 44 sich mit dem Rest des Steuerpults 30 überlappen, ist ein schmaler Spalt 48 zwischen diesen Flächen vorhanden.

Das HVAC-Modul 44 ist unterhalb des Heckfensters 36 plaziert und steht mit dem Innenraum des Bedienplatzes 28 pneumatisch in Verbindung. Das HVAC-Modul 44 regelt und kontrolliert die klimatischen Bedingungen des Innenraums. Das HVAC-Modul 44 des gezeigten Ausführungsbeispiels ist weiterhin mit einem angetriebenen Vorreiniger 50 für angesaugte Frischluft ausgestattet. Der angetriebene Vorreiniger 50 und das HVAC-Modul 44 saugen durch Luftöffnungen 68 Außenluft in den Bereich des Bedienplatzes 28. Der angetriebene Vorreiniger 50 entfernt den Hauptteil von Verunreinigungen aus der angesaugten Frischluft, bevor diese in den Bereich eines - hier nicht weiter gezeigten - Frischluftfilters gelangt, welcher stromaufwärts des Einlasses des HVAC-Moduls 44 angeordnet ist. Die Innenluft des Führerhauses 28 wird zum HVAC-Modul 44 zurückgeführt. Diese zurückgeführte Luft für das HVAC-Modul 44 wird durch die Öffnungen für die Steuerhebel 46, die Luftöffnungen 70 und durch den Spalt 48 angesaugt. Die rückgeführte Luft wird durch einen Umluftfilter gezogen, der pneumatisch stromaufwärts des HVAC-Moduls 44 angeordnet ist. Nachdem die rückgeführte Luft und die Außenluft den jeweils zugeordneten Filter passiert haben, werden beide Luftströme eingangsseitig des HVAC-Moduls 44 gemischt.

Die vom HVAC-Modul 48 erzeugte klimatisierte Luft wird durch eine erste Klima-Luftleitung 52 vertikal aufwärts zur Dachstruktur 38 geleitet. Die Dachstruktur 38 weist einen ersten Strömungskanal 54 und einen zweiten Strömungskanal 56 auf. Der die Klima-Luftleitung 52 durchströmende klimatisierte Luftstrom wird mittels eines Luftverteilers 58 auf den ersten Strömungskanal 54 und den zweiten Strömungskanal 56 aufgeteilt. Der Luftverteiler 58 umfasst hierfür einen im Querschnitt gesehen V-förmigen Leitungsbereich, der in die obere Schicht der inneren Dachstruktur eingeformt ist. Der erste Strömungskanal 54 ist kürzer als der zweite Strömungskanal 56. Der erste Strömungskanal 54 ist mit drei Luftöffnungen 60 versehen, wovon hier lediglich eine gezeigt ist, welche zur Ableitung der klimatisierten Luft in den Innenraum des Bedienplatzes 28 dienen. Die gezeigte Öffnung 60 leitet den klimatisierten Luftstrom abwärts entlang der Innenfläche des Frontfensters 32. Die zweite und dritte Öffnung 60 des ersten Strömungskanals 54, welche hier ebenfalls nicht gezeigt sind, leiten den klimatisierten Luftstrom abwärts entlang der Innenfläche der benachbarten Seitenfenster 34 und direkt zum Bediener.

In ähnlicher Weise ist der zweite Strömungskanal 56 mit Luftöffnungen 62 versehen, von denen hier lediglich eine gezeigt ist. Der zweite Strömungskanal 56 ist jedoch mit fünf Luftöffnungen 62 versehen. Die erste - hier nicht gezeigte - Luftöffnung leitet klimatisierte Luft abwärts entlang des Heckfensters 36. Die zweite Luftöffnung ist in der rechten hinteren Ecke der Dachstruktur 38 plaziert, um von dort aus klimatisierte Luft abwärts in Richtung des Bedieners zu leiten. Die dritte Luftöffnung leitet klimatisierte Luft abwärts entlang des benachbarten Seitenfensters 34. Die hier gezeigte vierte Luftöffnung 62 leitet klimatisierte Luft abwärts entlang des Frontfensters 34. Die fünfte Luftöffnung leitet klimatisierte Luft direkt in Richtung des Bedieners.

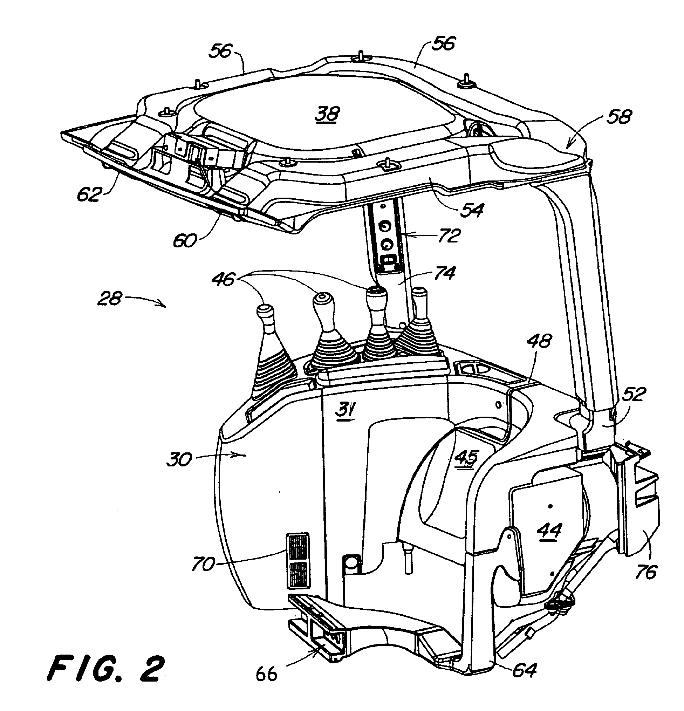

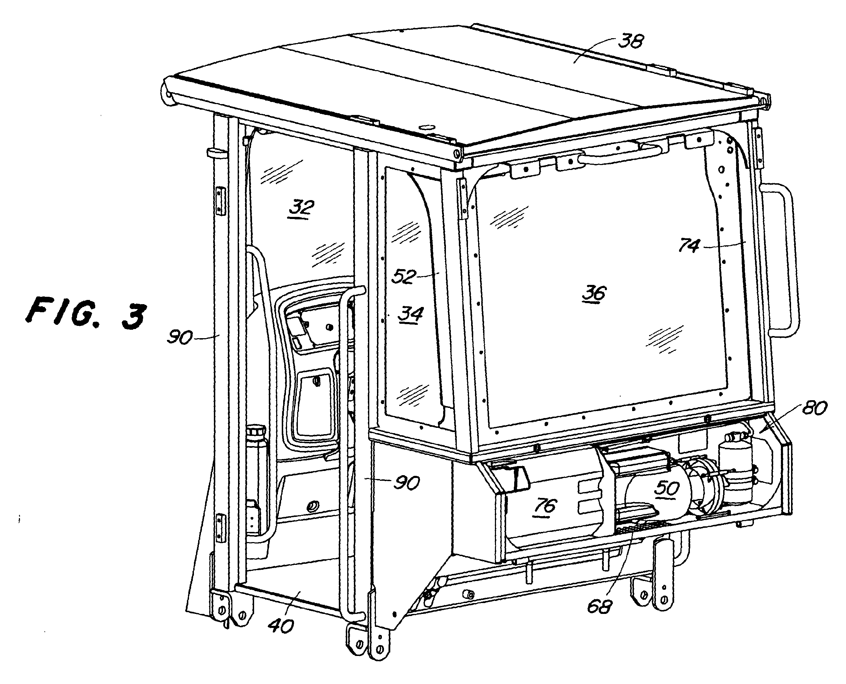

An dieser Stelle sei bemerkt, dass die in Fig. 2 sichtbare Dachstruktur 38, der innere Bereich der Dachstruktur 38 ist, welche die Strömungskanäle 54 und 56 trägt. Dieser Innenbereich der Dachstruktur 38 ist an der Innenfläche eines starren äußeren Dachbereichs montiert, welcher in der Figur 3 dargestellt ist. Üblicherweise ist der Innenbereich der Dachstruktur 38 aus Kunststoff oder einem anderen leichtgewichtigen Material hergestellt. Der Innenbereich umfasst zumindest zwei miteinander verschweißte Lagen, wobei die Strömungskanäle zwischen den gegenüberliegenden Lagen ausgebildet sind. Der Außenbereich der Dachstruktur 38 ist aus Blech oder einem hochfesten Kunststoff gefertigt.

Eine zweite Klima-Luftleitung 64 verläuft ausgehend vom HVAC-Modul 48 nach vorn und ist nach unten gerichtet. Diese Luftleitung 64 mündet in einen Öffnungsbereich 66, der unterhalb des Sitzes des Bedieners angeordnet ist. Dieser Öffnungsbereich 66 leitet klimatisierte Luft entlang des Bodens 40 des Führerhauses, um die unteren Gliedmaßen des Bedieners mit Wärme zu versorgen.

Die Bedienelemente 72 zur Steuerung des HVAC-Moduls 44 sind am rechten hinteren Eckpfosten 74 des Bedienplatzes 28 angeordnet.

Der Rückteil des Bedienplatzes 28 ist mit einer Zugangsöffnung 80 versehen, durch welche die Hauptkomponenten des HVAC-Moduls 44 und/oder der Vorreiniger 50 gewartet, instandgesetzt und/oder ausgetauscht werden können. Eine aus Kunststoff bestehende Abdeckung 76 für das HVAC-Modul 44, die durch elastische Befestigungen gehalten wird, schützt die Hauptkomponenten. Die Zugangsöffnung 80 ist in ihrer Größe derart dimensioniert, dass ein Austausch der Hauptkomponenten des HVAC-Moduls 44 von außen her möglich ist. Diese Hauptkomponenten umfassen das Gebläse, den Verdampfer sowie die Heizung. Zusätzlich kann ebenfalls der angetriebene Vorreiniger 50 durch die Zugangsöffnung 80 ausgetauscht werden, falls dies erforderlich ist. Eine aus Stahl bestehende Klappe 82 dient zum Verschließen der Zugangsöffnung 80 und schützt damit das HVAC-Modul 44 und den Vorreiniger 50 vor äußeren Einflüssen. Diese Klappe 82 ist drehbar und/oder klappbar am Führerhaus 26 durch Halteorgane, wie Scharniere 84 gelagert. Damit wird eine Drehbarkeit und/oder Klappbarkeit der Klappe 82 bezüglich einer Querachse erzielt. Die Klappe 82 wird durch zwei Bolzen geschlossen gehalten, die sich durch Ausnehmungen 86 in der oberen Kante der Klappe 82 und der oberen Kante des Bedienplatzes 28 erstrecken. Diese Bolzen sind mit vergrößerten Köpfen ähnlich einer Flügelmutter versehen, um eine leichte Handhabung durch den Bediener zum Öffnen der Klappe 82 ohne Werkzeug zu ermöglichen. Ein Überroll-Schutzsystem (ROPS) umfasst ferner vertikal ausgerichtete Pfosten 90, um den Bediener entsprechend zu schützen.

Die Installation des HVAC-Moduls 44 in das Führerhaus 26 erfolgt durch eine Montage im Bereich des Fußbodens 40 des Führerhauses 26 als Systemeinheit. Das HVAC-Modul 44 wird dabei durch die Öffnung des Rückfensters eingesetzt und am Fußboden 40 verankert. Das Führungspult 30 wird nach der Installation des HVAC-Moduls 44 montiert.

## Patentansprüche

1. Führerhaus für ein geländegängiges Arbeitsfahrzeug, mit einem einen Innenraum aufweisenden Bedienplatz (28), von dem aus ein Bediener das geländegängige Arbeitsfahrzeug steuert, weiterhin einem Frontfenster (32), einem Heckfenster (36), einem Dach (38) sowie einem Fußboden (40), und einem innerhalb des Bedienplatzes (28) untergebrachten und in pneumatischer Verbindung mit dem Bedienplatz (28) stehenden HVAC-Modul (44), **dadurch gekennzeichnet, dass** unterhalb des Heckfensters (36) eine von außen zugängliche Zugangsöffnung (80) vorgesehen ist, worüber das HVAC-Modul (44) reparierbar, montierbar und/oder demontierbar ist.

2. Führerhaus gemäß Anspruch 1, **dadurch gekennzeichnet, dass** mittels der Zugangsöffnung (80) Hauptkomponenten des HVAC-Moduls (44) reparierbar, montierbar und/oder demontierbar sind.

3. Führerhaus gemäß Anspruch 1 oder 2, **dadurch gekennzeichnet, dass** eine erste Klima-Luftleitung (52) mit dem HVAC-Modul (44) in pneumatischer Verbindung steht, um klimatisierte Luft in den Innenraum des Bedienplatzes (28) zu leiten.

4. Führerhaus gemäß einem der vorherigen Ansprüche, **dadurch gekennzeichnet, dass** eine erste Klima-Luftleitung (52) die klimatisierte Luft vertikal zum Dach (38) leitet, wobei von dort aus eine Verteilung der klimatisierten Luft in den Innenraum des Bedienplatzes (28) durch im Dach (38) montierte Luftöffnungen (60) erfolgt.

5. Führerhaus gemäß einem der vorherigen Ansprüche, **dadurch gekennzeichnet, dass** der Bereich des Daches (38) mit einem Luftverteiler (58) ausgestattet ist, der klimatisierte Luft von einer ersten Klima-Luftleitung (52) erhält und diese zwischen einem ersten Strömungskanal (54) im Dach (38) und einem zweiten Strömungskanal (56) im Dach (38) verteilt.

6. Führerhaus gemäß einem der vorherigen Ansprüche, **dadurch gekennzeichnet, dass** der erste Strömungskanal (54) mit weniger Luftöffnungen (60) als der zweite Strömungskanal (56) ausgestattet ist, und dass der Luftverteiler (58) die klimatisierte Luft ungleich zwischen dem ersten Strömungskanal (54) und dem zweiten Strömungskanal (56) verteilt, um den Hauptanteil der klimatisierten Luft durch den zweiten Strömungskanal (56) zu leiten.

7. Führerhaus gemäß einem der vorherigen Ansprüche, **dadurch gekennzeichnet, dass** eine zweite Klima-Luftleitung (64) zur Leitung klimatisierter Luft in den Innenraum des Bedienplatzes (28) vorgesehen ist, wobei die klimatisierte Luft durch die zweite Klima-Luftleitung (64) zum Fußboden (40) geleitet wird.

8. Führerhaus gemäß einem der vorherigen Ansprüche, **dadurch gekennzeichnet, dass** ein Steuerpult (30) vorgesehen ist, auf dem Bedienelemente angeordnet sind, wobei das Steuerpult (30) eine Pultwand aufweist, deren Außenfläche dem Innenraum zugewandt ist, wobei das Steuerpult (30) weiterhin diverse Öffnungen aufweist, durch welche Luft zu dem HVAC-Modul (44) rückführbar ist.

9. Führerhaus gemäß einem der vorherigen Ansprüche, **dadurch gekennzeichnet, dass** der Bedienplatz (28) über eine äußeren Luftöffnung zur Frischluftzuführung zum HVAC-Modul (44) verfügt.

10. Führerhaus gemäß einem der vorherigen Ansprüche, **dadurch gekennzeichnet, dass** das HVAC-Modul (44) eine Außenwand aufweist, die dem Innenraum zugewandt ist, wobei die Außenfläche der Außenwand identisch mit der Außenfläche der Pultwand ist.

11. Führerhaus gemäß einem der vorherigen Ansprüche, **dadurch gekennzeichnet, dass** der Bedienplatz (28) mit einer Klappe (82) zum Verschließen der Zugangsöffnung (80) ausgestattet ist, die klappbar und/oder drehbar am Bedienplatz (28) angebracht ist.

12. Führerhaus gemäß einem der vorherigen Ansprüche, **dadurch gekennzeichnet, dass** die Klappe (82) klappbar und/oder drehbar über eine unterhalb der Zugangsöffnung (80) angeordnete Querachse gelagert ist.

13. Geländegängiges Arbeitsfahrzeug mit einem Tragrahmen (12), an dem Bodenkontaktmittel (14) zum Fahren angebracht sind und mit einer Arbeitsausrüstung (24), die zur Ausführung von Arbeitsoperationen ebenfalls am Rahmen (12) angebracht ist, **dadurch gekennzeichnet, dass** ein Führerhaus (26) nach mindestens einem der vorstehenden Ansprüche vorgesehen ist.
